# EUROPEAN PATENT SPECIFICATION

(11) **EP 1 012 085 B1**
(45) Date of publication and mention of the grant of the patent: **26.11.2003**
(21) Application number: 98948932.3
(22) Date of filing: 28.08.1998
(51) Int. Cl.: B65G 47/61

(54) **APPARATUS FOR LOADING AND UNLOADING LEATHERS, SKINS OR SIMILARS, ON OR FROM, AIRCHAIN CONVEYORS**
VORRICHTUNG ZUR BE- UND ENTLADUNG VON HÄUTEN, FELLEN ODER DERGLEICHEN, AUF/VON KETTENHÄNGEBAHNFÖRDERER(N)
DISPOSITIF SERVANT A CHARGER ET A DECHARGER DES ARTICLES EN CUIR, TELS QUE DES PEAUX, PAR RAPPORT A DES CONVOYEURS A CHAINE AERIENS

(30) Priority: 02.09.1997 IT PI970049; 02.09.1997 IT PI970050
(43) Date of publication of application: 28.06.2000
(73) Proprietor: Thema Di Sani Antonello & C., S.N.C., 56029 S. Croce Sull'Armo (IT)
(72) Inventor: SANI, Antonello, I-56020 Montopoli V.A. (IT)
(74) Representative: Celestino, Marco
(86) International application number: EP9805705
(87) International publication number: WO99011548

(56) References cited:
- GB-A- 1 210 455
- GB-A- 2 053 123
- US-A- 3 623 719
- US-A- 4 550 905

## Description

### Field of the invention

This invention relates to an apparatus for automatically loading and unloading leather pieces, skins, or the like, onto or away from air chain conveyors equipped with horizontal hang-rods.

### Description of the prior art

In the field of leather processing, the air chain conveyors, generally of monorail type, equipped with specific skins supporting hang-rods, are commonly used in order to move skins through working points in the processing line.

The hang-rods consist, very simply, of horizontal rods having a free end, and being connected, at the other end, to the air chain conveyor; said rods are C-shaped, with the lower branch longer than the upper one, in order to achieve a good balance of the whole rod assembly.

The hang-rods may also consist of metal rods connected, at both ends, with the air chain conveyor, such kind of rods being used when large size skins are to be moved.

At present, the operations of skins loading and unloading onto or away from the rods are carried out manually, by specific workers. This burdens, in a considerable way, the production costs.

Apparatus are known that transfer skins between air chain conveyors, such as GB2053123 and US 4550905, or transfer a skin from a stacking device to a conveyor belt and viceversa, such as respectively US3623719 or GB 1210455. They do not teach, however, the loading or unloading of a skin onto and away from an air chain conveyor with respect to a ground level conveyor belt.

### Summary of the invention

The primary object of the present invention is to provide an apparatus for automatically loading and unloading skins, leather or the like, onto or away from air chain conveyors equipped with horizontal hang-rods.

According to the broadest aspect of the present invention, an apparatus is provided for loading and unloading skins, or the like, onto or away from air chain conveyors equipped with horizontal hang-rods, wherein a table, comprising means for bidirectionally dragging the skins, is inclinable, as a whole or partially, and is axially extendable until one of its end sides is placed in proximity of one hang-rod of said air chain conveyor. The loading operation of a skin onto said hang-rod takes place by combining the translation of the skin laying on said table and the timed back motion of the table itself, or a portion of it, up to the starting position, whereas the unloading operation takes place by just reversing the translatory motion of the leather on the table and by lifting one end side of the table, or a portion of it, between two flaps of the hanging leather.

The backward motion of the table, or a portion of it, is timed with respect to the skin translation on the table, by sensors that detect the skin position on the table.

Suitable means and devices are used to enhance the skin adhesion to the table surface and to facilitate the unloading operation through a separation of the skin flaps.

The above apparatus carries out in a totally automatic and, consequently, cost effective way the loading and unloading of leather pieces, skins, or the like, onto or away from air chain conveyors equipped with horizontal hang-rods.

The main features of the apparatus and method are defined by claims 1, 15 and 16, whereas preferred embodiments of the apparatus are defined by claims 2-14.

### Brief description of the drawings

For better understanding the features and operation of the apparatus of this invention, a preferred embodiment of the same is described below, with reference to the accompanying drawings, in which:
- Figure 1 is a schematic front view of an apparatus for loading and unloading skins according to the invention;
- Figure 2 is a top plan view of the apparatus of fig.1;
- Figure 3 is a side view of an apparatus according to the invention, when used in conjunction with a first kind of hang-rods;
- Figure 4 is a side view of an apparatus according to the invention, when used in conjunction with a second kind of hang-rods;
- Figure 5 is a schematic front view of the apparatus shown in fig.1, in a particular operating configuration;
- Figure 6 is a schematic front view of an apparatus according to the invention in which specific means and devices are shown;
- Figure 7 is a detailed schematic view of a portion of the apparatus shown in fig.6;
- Figure 8 is a top plan view of a device of the apparatus shown in fig.6;
- Figure 9, 10 and 11 show schematically three embodiments of an apparatus according to the invention;
- Figure 12 shows a detailed portion of a component of an apparatus according to the invention.

### Description of preferred embodiments

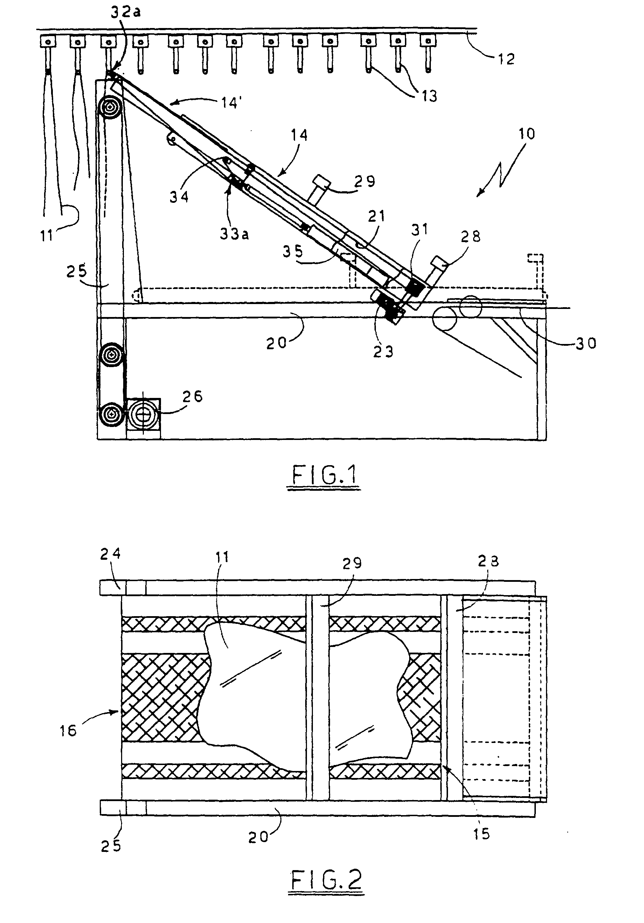

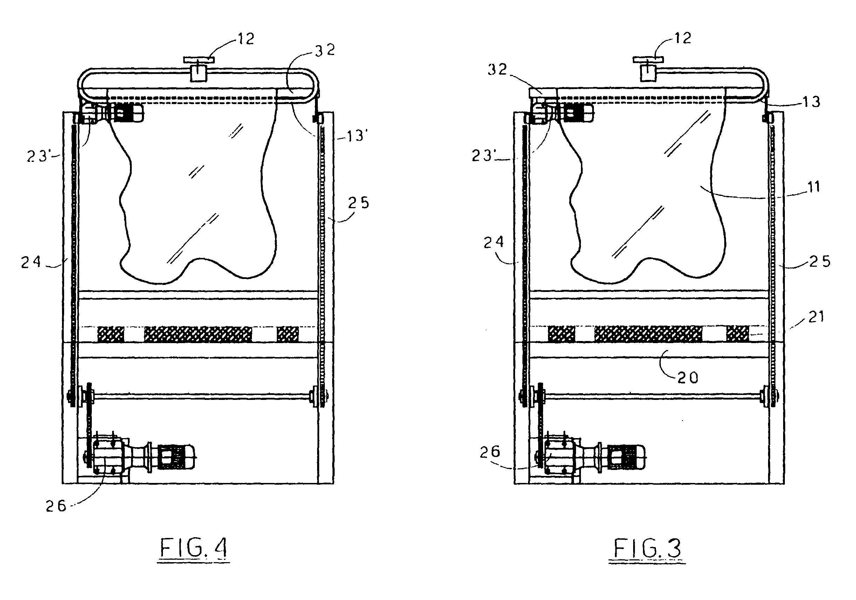

Referring first to the embodiment of fig.1, an apparatus 10 for loading and unloading skins 11 onto or away from air chain conveyors 12, is equipped with horizontal hang-rods 13, that are shown better in figures 3 and 4.

Apparatus 10 includes a table 14, supported by a fixed structure 20, high enough to allow the regular supply of skins onto table 14, by means of usual conveyor belts 30, common in the field of leather processing.

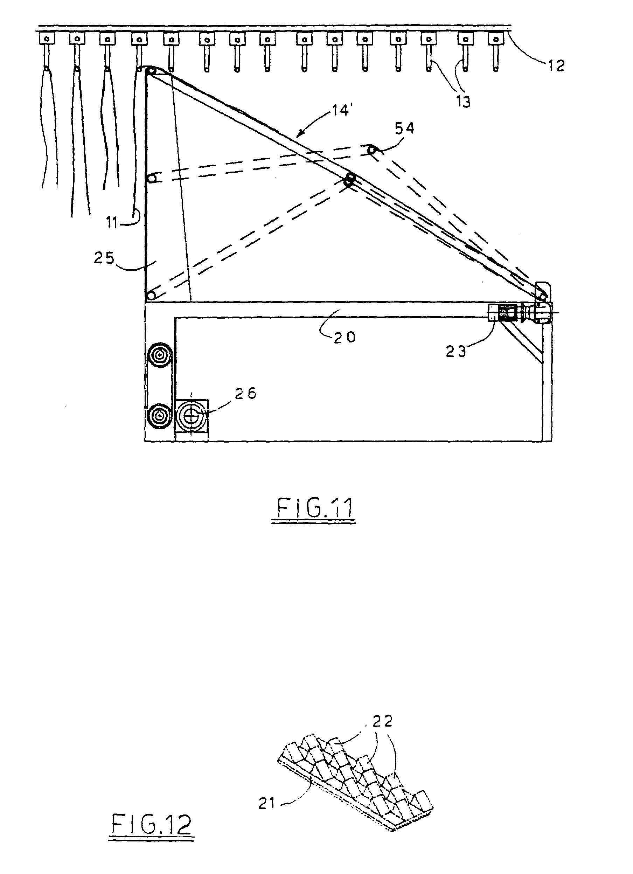

The skin laying surface of table 14, has a belt 21 made of rubber or similar material, having small protrusions 22, shown in detail in fig. 12, useful to increase the skin adhesion to the table surface.

Belt 21 is continuously rotating, at constant speed, about two guide rolls 31, 32, placed at two opposite end sides 15, 16 of table 14. The rotation of the belt is operated by an electric motor 23.

As shown in figures 3 and 4 an actuator 23', dedicated to the belt rotation, can be placed either at the front end side 16 of table 14, or at the opposite end side 15.

Figures 3 and 4 refer to the use of apparatus 10 in conjunction with two different hang-rods; more precisely, in fig.3 hang-rod 13 is open type, in which only one of its ends is connected to the air chain conveyor 12; in fig.4, instead, hang-rod 13' is of the type in which both ends are connected to the air chain conveyor.

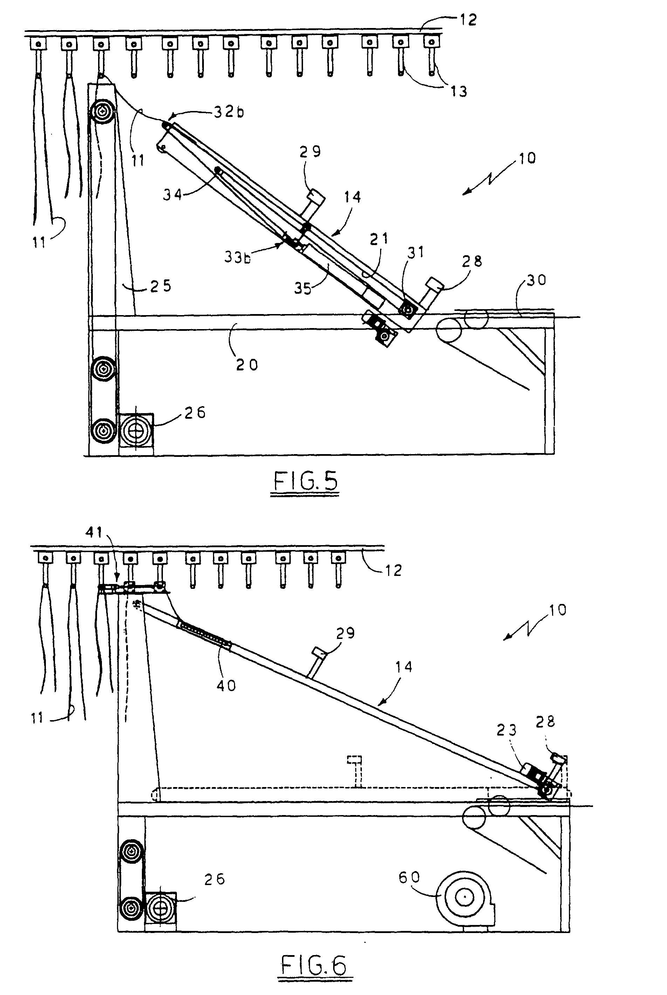

By comparatively examining figures 1 and 5, the upper guide roll 32 of belt 21 moves, in the normal working of the apparatus, between the positions numbered with 32a and 32b; these positions correspond, respectively, to the configurations of complete extension and complete retraction of table 14.

In particular, when apparatus 10 operates as a loader, position 32a of fig.1 represents where the transfer starts of skin 11 from table 14 to hang-rod 13, and position 32b, shown in fig.5, represents where the above transfer is quite completed.

Guide roll 31 of belt 21 maintains a fixed position with respect to table 14; therefore, the extension and retraction of the table upper surface can take place by using two further guide rolls, 33 and 34, located on the lower face of table 14; said rolls 33, 34 recover the remaining part of belt 21 during table 14 retraction, and, at the same time, provide the belt portion needed to the table extension.

One of said rolls, 34, has always a fixed position with respect to table 14; the other roll, 33, moves between position 33a of fig.1 and position 33b of fig.5, that correspond, respectively, to the positions 32a and 32b of guide roll 32.

Guide roll 33 is moved from position 33a to position 33b, and vice versa, through a pneumatic actuator 35.

When the apparatus 10 operates as skins unloader, its front end side 16 is moved vertically, by actuator 26, and is properly guided by lateral frame columns 24, 25.

The opposite end side 15 of table 14, correspondingly, can move horizontally. At this regard, in fig.6 a configuration is schematically shown, with broken line, of table 14 when horizontal.

Two sets 28 and 29 of proximity sensors are provided that detect the presence of skins 11, in the nearby of table 14.

Said sensors are used to calculate the length and the position of skins on table 14, for timing the work of table 14, or a portion 14' thereof, with respect to the skin motion, when loading the skin on hang-rod 13.

An air-exhauster box 40, connected with an external vane aspirator 60, is arranged within table 14 for enhancing the skin adhesion to the upper surface of the table; this is useful especially during the unloading operation of skins 11 from the air chain conveyor 12.

A device 41 for separating the hanging flaps of skin 11 at hang-rod 13 when unloading is arranged at the top of lateral frame column 25.

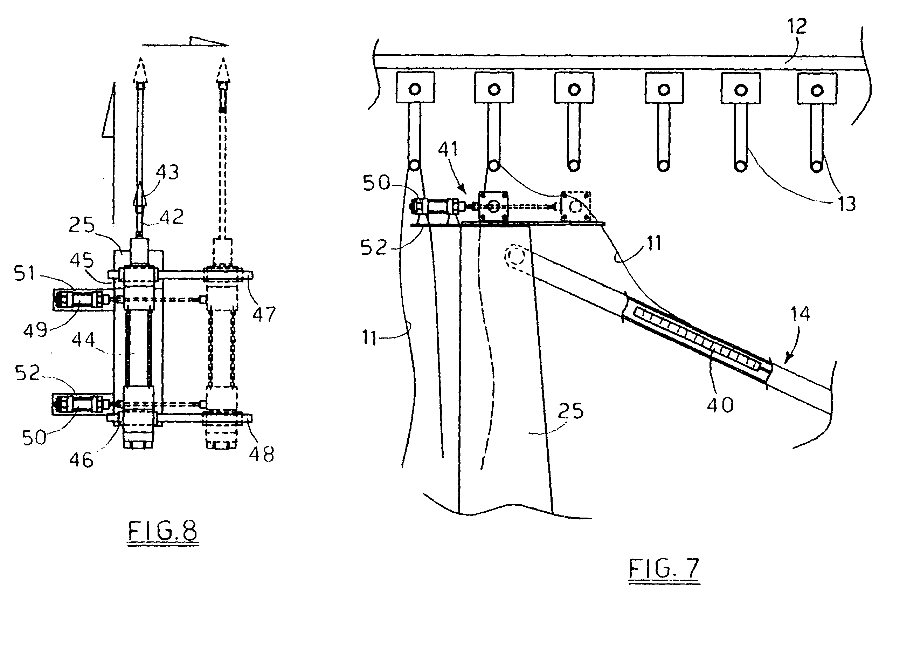

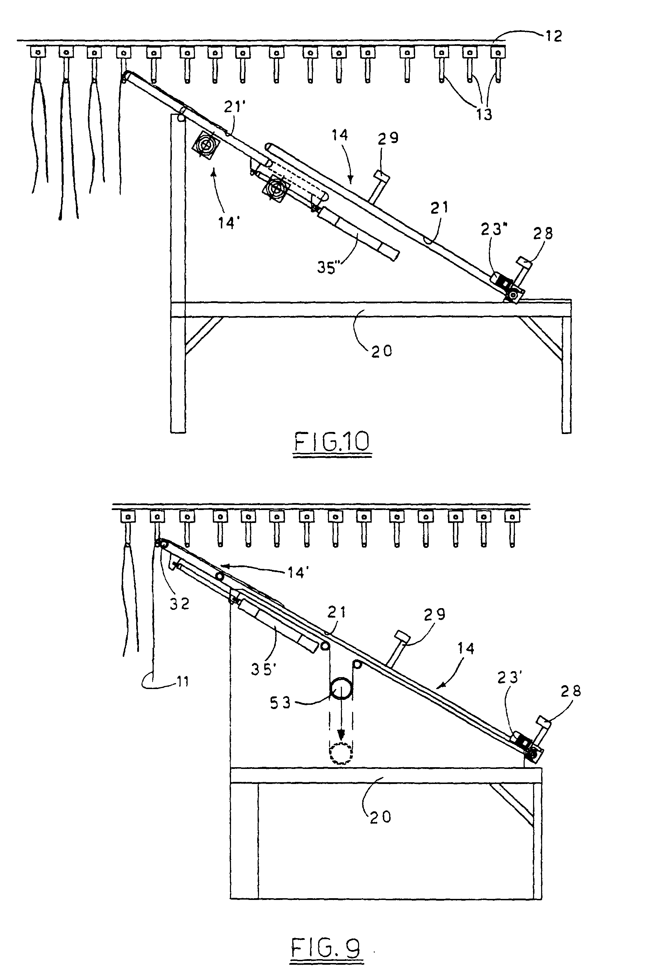

As clearly shown in figures 7 and 8, device 41 includes a rod 42 with a pointed terminal 43; said rod is connected, at the other end, to a linear pneumatic actuator 44, capable of moving it axially between the flaps of the hanging skin on hang-rod 13. Rod 42, and its actuator 44, are integral to two small platforms 45, 46 slidable on two guides 47, 48, placed on frame column 25, perpendicularly to the working direction of actuator 44. Two further pneumatic cylinders 49, 50 mounted on two separate brackets 51, 52, that are fixed to column 25, move both rod 42 and actuator 44 towards and away from the position shown with broken line in figures 7 and 8.

The above described apparatus operates as follows.

In the loading step skin 11, through external conveyor belts 30, reaches table 14 and lies on belt 21, that, as above said, is continuously rotating through electric motor 23.

At this moment, guide roll 32, that determines the front end of table 14, is in position 32b of fig.5.

When the front edge of skin 11 passes under sensors set 28, roll 32 is pushed towards hang-rod 13 by pneumatic actuator 35; the latter acts directly on guide roll 33, and, indirectly, through a kinematic mechanism, on guide roll 32.

The forward motion of front end side 16 of table 14 stops when actuator 35 ends its end of stroke; table 14 remains in this extended configuration until skin 11 has been transferred, for a half of its length, on hang-rod 13.

The very instant in which that happens is determined through a time counting controlled by sensors sets 28, 29.

In fact, starting from when the front edge of skin 11 passes under sensor set 29, the skin passing time under the sensors is counted; thanks to the constant speed of the skin motion, the counted time corresponds to measuring the leather length.

The time count is stopped when the rear edge of skin 11 passes under sensors set 28; since the distance between sensor sets 28 and 29 is known, the skin length and its position on table 14 can be calculated in a very precise way; in particular, the very instant can be calculated when half skin has passed from table 14 to hang-rod 13.

At said instant actuator 35 is reversed in order to bring guide roll 32 back to the starting position of the loading cycle.

It has to be noted that the back speed of roll 32 is just the opposite of the speed of skin 11 on table 14, so that there is no slipping between the skin and the hang-rod, in this phase. Therefore, the transfer of the skin to the hang-rod occurs in a reliable way, that is with skin perfectly balanced on the rod.

As the transfer of the skin on the rod is completed, or almost completed, hang-rod 13 is stepped forward by air chain conveyor 12, in order to bring the next rod to the loading position; so, a new loading operation is started according to the above procedure.

The above operating procedure of leather loading applies also to the embodiment schematically shown in fig. 9.

This embodiment is characterized in that the recovery of the remaining part of belt 21, during the retraction of table 14, is accomplished thanks to the weight force of an appropriate roll 53; furthermore, it is characterized in that the actuator 35', causing the extension and retraction of table 14, acts directly on guide roll 32.

The same loading procedure is still effective in the embodiment schematically shown in fig.10, where an actuator 35" is controlled according to the same criteria and the same operating cycle above described for actuator 35. The difference between this embodiment and that of fig.1 is that, in this case, the movable upper portion 14' of table 14 is physically distinct from the lower fixed portion of the table same.

More precisely, the upper portion 14' comprises a specific belt 21', put into rotation by an actuator indicated by a light line, physically distinct from actuator 23", dedicated to the rotation of fixed belt portion 21. Movable upper portion 14', with respect to the lower fixed portion of table 14, is arranged in such a way that the skins pass simply by gravity from belt 21 to belt 21'.

Concerning the unloading of skins 11 away from hang-rods 13, the starting command of actuator 26, that lifts end side 16 of table 14, or a portion 14' thereof, occurs once the information about the proper positioning of skin supporting rod 13 reaches the control unit of apparatus 10, and after that the separation of the skin flaps has been accomplished by pneumatic cylinder 44 and, then, by small cylinders 49, 50.

When belt 21 rotates opposite to the loading step, the unloading is easily carried out when, in its upside motion between the skin flaps, it comes into contact with one of the flaps and pulls it away from hang-rod 13 thanks to the adhesion between belt and leather, especially enhanced by air aspirator 40, as schematically shown in fig.6.

The motion back to the initial position of table 14, or 14' if referred to the embodiment of fig.11, starts when the front edge of the skin passes under sensors set 29.

Concerning the embodiment of fig.11, a mobile portion 14' of table 14 is joined to a fixed portion of the same table through a hinge 54; the free end side of mobile portion 14' is lifted and lowered, properly guided by lateral columns 24, 25.

When table 14, or a portion of it 14', reaches the cycle starting position, indicated with a broken line, the control unit of the apparatus sends to the air chain conveyor control an appropriate signal, that steps forward the hang-rods, so that a new unloading cycle can start of the next hanging skin.

It must be noted that the schematic representation of table 14 shown in fig.6 refers to the embodiment of the present invention shown in fig.1 as well as to the embodiments of figures 9 and 10.

It must also be noted that the lateral guide columns 24, 25 are slightly leaning towards the engaging hang-rod; this produces a small overlapping of the table front end side 16 on hang-rod 13, thus enabling the rod with skin 11 to pass to the loading operation.

Still considering the loading operation, according to one aspect of the present invention, once skin 11 reaches table 14, the front end side 16 of the same may be lifted at a speed so that the table reaches its final loading position before that the front edge of skin 11 reaches front end side 16.

The back speed of the table is timed with the translation speed of skin 11 on table 14, so that, also in this case, there is no slipping between the skin and the hang-rod in the final phase of the loading operation.

As we can see, the efficiency of the proposed apparatus is the same for all the embodiments above shown.

Various modifications can be made.

For instance, the skins carrying means may have different shape; the actuators dedicated to the belt rotation may be arranged in different ways; and the same may be done for the actuators dedicated to the lifting of the table, or a portion of it.

The skin presence sensors on table 14 may be different in number and position with respect to the shown embodiments.

Obviously, also the fixed supporting structure of the apparatus of the present invention may differ from those shown in the appended drawings.

## Claims

1. Apparatus (10) for loading and unloading skins (11), or the like, onto or away from air chain conveyors (12) equipped with horizontal hang-rods (13), said apparatus comprising:
- at least one table (14) including means (21, 23) for bidirectionally dragging said skins and bidirectionally carrying said skins between two end sides (15, 16) of said table,
- means (26) for inclining said table,
- means (35, 35', 35") for axially extending said table,
- support means (20) to which one end side (15) of said table is constrained,
- wherein the other end side (16) of said table during loading is cyclically moved between a starting position to an operating inclined and extended position in proximity of one of said hang-rods (13), to put each cycle a skin from said table (14) onto said hang-rod (13) by combining a forward translation of the skin on the table (14) and a withdrawal of the table (14) or a portion of it (14'); and
- wherein the other end side (16) of said table during unloading is cyclically moved between a lowered starting position to an operating lifted position between the flaps of the hanging skin in proximity of one of said hang-rods (13), to put in each cycle a skin from said hang-rod (13) onto said table (14), the skin translatory motion on the table being opposite with respect to the loading step.

2. Apparatus (10) according to claim 1, wherein sensor means (28, 29) are provided for detecting the skins (11) passage at predetermined points on said table (14), for properly timing the motion of said table (14), or a portion of it (14'), between said starting and operating position, and the translation of skins carried (21, 23) in either directions on said table.

3. Apparatus (10) according to claim 2, wherein said extending and inclining means, during the loading operation, are controlled to start said backward motion of the table (14), or a portion of it (14'), at the very exact instant in which half skin has been transferred from said apparatus (10) to said air chain conveyor (12), said instant being determined by measuring the time between the passage of a front edge of skin under a first set (28) and a second set (29) of said sensor means.

4. Apparatus (10) according to claim 3, wherein said extending means withdraw back the table (14), or a portion of it (14'), at a backward speed opposite to the forward translation speed of skins (11) on said table (14, 14').

5. Apparatus (10) according to any of the previous claims, wherein said carrying means (21) include at least one belt of rubber or similar material, having small protrusions (22) useful to increase the adhesion on the belt surface, said belt rotating continuously about at least two guide rolls (31, 32) placed at said end sides (15, 16) of said table (14).

6. Apparatus (10) according to claim 5, wherein said belt (21) rotates continuously about two further guide rolls (33, 34), one of said further guide rolls (34) being in a fixed position with respect to said table (14), the other further guide roll (33) being shiftable by said extending means (35) between two positions (33a, 33b) corresponding, respectively, to said completely extended position and to said completely retracted position of the table (14).

7. Apparatus (10) according to claim 1, wherein said inclining means (26) lift and lower said end side (16) of the table (14) guided by two lateral columns (24, 25) of said support means (20), said columns being slightly leaning towards the engaging hang-rod (13) so that the table end side (16) overlaps said hang-rod (13) in the loading phase.

8. Apparatus (10) according to claim 7, wherein said table (14) comprises a fixed portion and a mobile portion (14') joined by a hinged joint (54), the free end side (16) of said mobile portion (14') being lifted and lowered by said inclining means (26) and being guided by said two lateral columns (24, 25).

9. Apparatus (10) according to claim 5, wherein said belt (21) is pulled down by the weight force of a roll (53) located in the lower face of said table (14), so as to adjust the length variations of the upper surface of the belt, said variations being due to the extension and retraction motion of a portion (14') of said table (14).

10. Apparatus (10) according to claim 1, wherein said table (14) comprises two belts (21, 21') continuously rotating by means of two separate actuators, one of said belts (21) being in a fixed position relative to said table, the other belt (21') being movable between two positions corresponding respectively to said completely extended position and to said completely retracted position of the table (14).

11. Apparatus (10) according to any of the previous claims, comprising means (41) for separating, during the unloading operation, the two flaps of the skin (11) hanging on said hang-rod (13).

12. Apparatus (10) according to claim 11, wherein said separating means (41) include a rod (42) having a pointed terminal (43), said rod being connected, at the other end, to a linear pneumatic actuator (44) capable of moving it axially between the two flaps of the skin hanging on the hang-rod (13), said pointed rod (42) and its actuator (44) being constrained to two small platforms (45, 46) slidable on two guides (47, 48) located on a frame column (25) perpendicularly to the working direction of said actuator (44), two further pneumatic cylinders (49, 50) being mounted on two separate brackets (51, 52) fixed to said column (25) so as to separate the skin flaps by moving both the rod (42) and the actuator (44) along said guides (47, 48) after that said rod (42) has been inserted between said skin flaps.

13. Apparatus (10) according to any preceding claim, wherein air-aspirators (40) are located inside said table (14), in proximity of its upper surface, so as to enhance the skins adhesion to said table, in particular, during the skin unloading operation.

14. Method for loading skins, or the like, onto air chain conveyors equipped with horizontal hang-rods, comprising the steps of:
- conveying a skin (11) along a table (14) having an end side (15) constrained to support means (20);
- detecting the skin (11) passage at a first predetermined point (28) of said table;
- moving the other side (16) of said table (14), by extending or inclining in the whole or partially said table (14) between a starting position and an operating position, said starting position corresponding to a completely retracted position of said table, said operating position corresponding to an inclined position or a completely extended position of said table where said other end side (16) is in proximity of one hang-rod (13) of said air chain conveyor;
- detecting the skin passage at a second predetermined point (29) of said table (14),
- bringing the first half portion of the skin (11) beyond said hang-rod (13),
- moving back said other end side (16) of the table (14) toward said starting position.

15. Method for unloading skins, or the like, away from air chain conveyors equipped with horizontal hang-rods, comprising the steps of:
- lifting from a starting position an end side (16) of a table (14) between the two flaps of a skin (11) hanging on a hang-rod (13) of said air chain conveyor, said table(14) having another end side (15) constrained, in a fixed or slidable way, to support means (20),
- carrying said skin (11) from said lifted end side (16) along said table toward said other end side (15),
- detecting the skin passage at a predetermined point (29) of said table (14),
- moving back said lifted end side (16) of the table (14) toward said starting position.

## Patentansprüche

1. Vorrichtung (10) zum Laden und Entladen von Häuten (11) o.ä. auf oder von Kettenhängebahnförderer(n) (12), die mit horizontalen Hängestangen (13) ausgerüstet sind, wobei die Vorrichtung Folgendes umfasst:
- mindestens einen Tisch (14) einschließlich Mitteln (21, 23), um die Häute zwischen zwei Endseiten (15, 16) des Tisches bidirektional zu ziehen und bidirektional zu tragen,
- Mittel (26) zum Neigen des Tisches,
- Mittel (35, 35', 35'') zum axialen Ausfahren des Tischs,
- Stützmittel (20), an denen eine Endseite (15) des Tischs befestigt ist,
- wobei die andere Endseite (16) des Tischs während des Ladens zyklisch zwischen einer Startposition und einer geneigten und ausgefahrenen Betriebsposition in der Nähe einer der Hängestangen (13) bewegt wird, um in jedem Zyklus eine Haut von dem Tisch (14) auf den Hängestab (13) zu bringen, indem eine Translationsbewegung der Haut auf dem Tisch (14) nach vorne und ein Einfahren des Tischs (14) oder eines Teils (14') davon kombiniert wird, und
- wobei die andere Endseite (16) des Tischs während des Entladens zyklisch zwischen einer gesenkten Startposition und einer angehobenen Betriebsposition zwischen den Lappen der hängenden Haut in der Nähe einer der Hängestangen (13) bewegt wird, um in jedem Zyklus eine Haut von der Hängestange (13) auf den Tisch (14) zu legen, wobei die translatorische Bewegung der Haut auf dem Tisch umgekehrt zum Ladeschritt verläuft.

2. Vorrichtung (10) nach Anspruch 1, bei der Sensormittel (28, 29) vorgesehen sind, damit das Vorbeilaufen der Haut (11) an vorbestimmten Punkten an dem Tisch (14) erfasst wird, um die Bewegung des Tischs (14) oder eines Teils (14') davon zwischen der Start- und der Betriebsposition und die Translation der Häute, die auf dem Tisch in die eine oder die andere Richtung getragen (21, 23) werden, ordnungsgemäß zeitlich festzulegen.

3. Vorrichtung (10) nach Anspruch 2, bei der die Ausfahr- und die Neigemittel während des Ladevorgangs so gesteuert werden, dass sie die Rückbewegung des Tischs (14) oder eines Teils (14') davon genau zu dem Zeitpunkt starten, an dem die Hälfte der Haut von der Vorrichtung (10) zum Kettenhängebahnförderer (12) übertragen wurde, wobei der Zeitpunkt durch Messen der Zeit, die zwischen dem Vorbeilaufen eines vorderen Rands einer Haut an einem ersten Satz (28) und an einem zweiten Satz (29) der Sensormittel vergeht, bestimmt wird.

4. Vorrichtung (10) nach Anspruch 3, bei der die Ausfahrmittel den Tisch (14) oder einen Teil (14') davon mit einer Rückgeschwindigkeit einfahren, die der Vorwärtstranslationsgeschwindigkeit der Häute (11) auf dem Tisch (14, 14') entgegengesetzt ist.

5. Vorrichtung (10) nach einem der vorhergehenden Ansprüche, bei der die Tragemittel (21) mindestens ein Band aus Gummi oder einem ähnlichen Material mit kleinen Vorsprüngen (22), die der Erhöhung der Haftung auf der Bandoberfläche dienen, umfassen, wobei sich das Band fortgesetzt um mindestens zwei an den Endseiten (15, 16) des Tischs (14) angeordnete Führungsrollen (31, 32) dreht.

6. Vorrichtung (10) nach Anspruch 5, bei der sich das Band (21) fortgesetzt um zwei weitere Führungsrollen (33, 34) dreht, wobei eine der weiteren Führungsrollen (34) in einer festen Position in Bezug auf den Tisch (14) ist, während die andere weitere Führungsrolle (33) von den Ausfahrmitteln (35) zwischen zwei Positionen (33a, 33b), die der vollkommen ausgefahrenen Position bzw. der vollkommen eingefahrenen Position des Tischs (14) entsprechen, verschoben werden kann.

7. Vorrichtung (10) nach Anspruch 1, bei der die Neigemittel (26) die Endseite (16) des Tischs (14) unter Führung durch zwei seitliche Säulen (24, 25) der Stützmittel (20) anheben und senken, wobei die Säulen leicht zu der in Eingriff stehenden Hängestange (13) geneigt sind, so dass die Tischendseite (16) die Hängestange (13) in der Ladephase überlappt.

8. Vorrichtung (10) nach Anspruch 7, bei der der Tisch (14) einen festen Teil und einen beweglichen Teil (14') umfasst, die mit einem Scharniergelenk (54) verbunden sind, wobei die freie Endseite (16) des beweglichen Teils (14') durch die Neigemittel (26) angehoben und gesenkt und durch die beiden seitlichen Säulen (24, 25) geführt wird.

9. Vorrichtung (10) nach Anspruch 5, bei der das Band (21) durch die Gewichtskraft einer an der Unterseite des Tischs (14) angeordneten Rolle (53) hinuntergezogen wird, um die Längenänderungen der oberen Fläche des Bands einzustellen, die auf die Aus- und Einfahrbewegung eines Teils (14') des Tische (14) zurückzuführen sind.

10. Vorrichtung (10) nach Anspruch 1, bei der der Tisch (14) zwei Bänder (21, 21') umfasst, die sich. mittels zweier getrennter Stellglieder fortgesetzt drehen, wobei eines der Bänder (21) sich bezüglich des Tischs in einer festen Position befindet und das andere Band (21') zwischen zwei Positionen, die jeweils der vollkommen ausgefahrenen Position und der vollkommen eingefahrenen Position des Tischs (14) entsprechen, bewegbar ist.

11. Vorrichtung (10) nach einem der vorhergehenden Ansprüche mit Mitteln (41) zum Trennen der beiden Lappen der Haut (11), die auf der Hängestange (13) hängt, während des Entladevorgangs.

12. Vorrichtung (10) nach Anspruch 11, bei der die Trennmittel (41) eine Stange (42) mit einem spitzen Ende (43) umfassen, die am anderen Ende mit einem linearen pneumatischen Stellglied (44) verbunden ist, das sie axial zwischen den beiden Lappen der auf der Hängestange (13) hängenden Haut bewegen kann, wobei die spitze Stange (42) und ihr Stellglied (44) an zwei kleinen Plattformen (45, 46) befestigt sind, die auf zwei Führungen (47, 48) gleiten können, die sich auf einer senkrecht zur Arbeitsrichtung des Stellglieds (44) stehenden Rahmensäule (25) befinden, wobei zwei weitere pneumatische Zylinder (49, 50) an zwei getrennten Bügeln (51, 52) angebracht sind, die so an der Säule (25) befestigt sind, dass sie die Hautlappen trennen, indem sie sowohl die Stange (42) als auch das Stellglied (44) an den Führungen (47, 48) entlang bewegen, nachdem die Stange (42) zwischen die Hautlappen eingeführt worden ist.

13. Vorrichtung (10) nach einem der vorhergehenden Ansprüche, bei der ein Luftsauggebläse (40) im Tisch (14) in der Nähe seiner oberen Fläche angeordnet ist, um die Haftung der Haut am Tisch besonders während des Häuteentladevorgangs zu verbessern.

14. Verfahren zum Laden von Häuten o.ä. auf mit horizontalen Hängestangen ausgerüstete Kettenhängebahnförderer, bei dem man
- eine Haut (11) einen Tisch (14) mit einer an Stützmitteln (20) befestigten Endseite (15) entlang befördert;
- das Vorbeilaufen der Haut (11) an einem ersten vorbestimmten Punkt (28) des Tischs erfasst;
- die andere Seite (16) des Tischs (14) bewegt, indem man den Tisch (14) ganz oder teilweise zwischen einer Startposition und einer Betriebsposition ausfährt oder neigt, wobei die Startposition einer vollkommen eingefahrenen Position des Tischs und die Betriebsposition einer geneigten Position oder einer vollkommen ausgefahrenen Position des Tischs entspricht, wobei sich die andere Endseite (16) in der Nähe einer Hängestange (13) des Kettenhängebahnförderers befindet;
- das Vorbeilaufen der Haut (11) an einem zweiten vorbestimmten Punkt (29) des Tischs (14) erfasst;
- die erste Hälfte der Haut (11) über die Hängestange (13) legt und
- die andere Endseite (16) des Tischs (14) zur Startposition zurückbewegt.

15. Verfahren zum Entladen von Häuten o.ä. von mit horizontalen Hängestangen ausgerüsteten Kettenhängebahnförderern, bei dem man
- eine Endseite (16) eines Tischs (14) aus einer Startposition zwischen die beiden Lappen einer auf einer Hängestange (13) des Kettenhängebahnförderers hängenden Haut (11) anhebt, wobei eine andere Endseite (15) des Tischs (14) fest oder gleitend an Stützmitteln (20) befestigt ist;
- die Haut (11) von der angehobenen Endseite (16) am Tisch entlang zur anderen Endseite (15) trägt,
- das Vorbeilaufen der Haut an einem vorbestimmten Punkt (29) des Tischs (14) erfasst und
- die angehobene Endseite (16) des Tischs (14) zur Startposition zurückbewegt.

## Revendications

1. Dispositif (10) pour charger et décharger des peaux (11), ou analogues, sur ou à partir de transporteurs à chaîne aériens (12) équipés de barres de suspension horizontales (13), ledit dispositif comprenant:
- au moins une table (14) comprenant des moyens (21, 23) pour entraîner d'une façon bidirectionnelle lesdites peaux et pour conduire d'une façon bidirectionnelle lesdites peaux entre deux côtés d'extrémité (15, 16) de ladite table,
- des moyens (26) pour incliner ladite table,
- des moyens (35, 35', 35") pour étendre axialement ladite table,
- des moyens de support (20) sur lesquels un premier côté d'extrémité (15) de ladite table est fixé,
- dans lequel l'autre côté d'extrémité (16) de ladite tablé est déplacé d'une façon cyclique durant le chargement entre une position de départ et une position opérationnelle inclinée et étendue à proximité de l'une desdites barres de suspension (13), afin de placer lors de chaque cycle une peau en provenance de ladite table (14) sur ladite barre de suspension (13) en combinant une translation vers l'avant de la peau sur la table (14) et un retrait de la table (14) ou d'une portion (14') de celle-ci; et
- dans lequel l'autre côté d'extrémité (16) de ladite table est déplacé d'une façon cyclique durant le déchargement entre une position de départ abaissée et une position opérationnelle soulevée entre les pans de la peau suspendue à proximité de l'une desdites barres de suspension (13), afin de placer lors de chaque cycle une peau en provenance de ladite barre de suspension (13) sur ladite table (14), le mouvement de translation de la peau sur la table étant opposé à celui effectué lors de l'étape de chargement.

2. Dispositif (10) selon la revendication 1, dans lequel des moyens de capteur (28, 29) sont prévus dans le but de détecter le passage des peaux (11) en des points prédéterminés sur ladite table (14), de manière à synchroniser correctement le mouvement de ladite table (14), ou d'une portion (14') de celle-ci, entre lesdites position de départ et opérationnelle, et la translation des peaux transportées (21, 23) dans les deux directions sur ladite table.

3. Dispositif (10) selon la revendication 2, dans lequel lesdits moyens d'extension ou d'inclinaison, durant l'opération de chargement, sont commandés de manière à commencer ledit mouvement de recul de la table (14), ou d'une portion (14') de celle-ci, à l'instant très précis où la moitié de la peau a été transférée à partir dudit dispositif (10) sur ledit transporteur pneumatique à chaîne (12), ledit instant étant déterminé en mesurant l'intervalle de temps entre le passage d'un bord avant d'une peau en dessous d'un premier ensemble (28) et d'un deuxième ensemble (29) desdits moyens de capteur.

4. Dispositif (10) selon la revendication 3, dans lequel lesdits moyens d'extension retirent la table (14), ou une portion (14') de celle-ci, vers l'arrière, à une vitesse de recul opposée à la vitesse de translation vers l'avant des peaux (11) sur ladite table (14, 14').

5. Dispositif (10) selon l'une quelconque des revendications précédentes, dans lequel lesdits moyens d'entraînement (21) comprennent au moins un courroie constituée de caoutchouc ou d'une matière similaire, comportant de petites saillies (22) utiles pour augmenter l'adhérence sur la surface de la courroie, ladite courroie tournant d'une façon continue autour d'au moins deux rouleaux de guidage (31, 32) placés auxdits côtés d'extrémité (15, 16) de ladite table (14).

6. Dispositif (10) selon la revendication 5, dans lequel ladite courroie (21) tourne d'une façon continue autour de deux autres rouleaux de guidage (33, 34), un premier desdits autres rouleaux de guidage (34) se trouvant en position fixe par rapport à ladite table (14), l'autre desdits autres rouleaux de guidage (33) pouvant être déplacé par lesdits moyens d'extension (35) entre deux positions (33a, 33b) correspondant, respectivement, à ladite position complètement étendue et à ladite position complètement rétractée de la table (14).

7. Dispositif (10) selon la revendication 1, dans lequel lesdits moyens d'inclinaison (26) soulèvent et abaissent ledit côté d'extrémité (16) de la table (14) guidé par deux colonnes latérales (24, 25) desdits moyens de support (20), lesdites colonnes étant légèrement inclinées en direction de la barre de suspension d'engagement (13), de telle sorte que le côté d'extrémité de la table (16) recouvre ladite barre de suspension (13) lors de la phase de chargement.

8. Dispositif (10) selon la revendication 7, dans lequel la table (14) comprend une portion fixe et une portion mobile (14') jointes par un joint articulé (54), le côté d'extrémité libre (16) de ladite portion mobile (14') étant soulevé et abaissé par lesdits moyens d'inclinaison (26) et étant guidé par lesdites deux colonnes latérales (24, 25).

9. Dispositif (10) selon la revendication 5, dans lequel ladite courroie (21) est tirée vers le bas par la force du poids d'un rouleau (53) situé dans la face inférieure de ladite table (14), de manière à régler les variations de la longueur de la surface supérieure de la courroie, lesdites variations étant dues au mouvement d'extension et de retrait d'une portion (14') de ladite table (14).

10. Dispositif (10) selon la revendication 1, dans lequel ladite table (14) comprend deux courroies (21, 21') tournant d'une façon continue au moyen de deux systèmes de commande séparés, une première desdites courroies (21) se trouvant dans une position fixe par rapport à ladite table, l'autre courroie (21') pouvant être déplacée entre deux positions correspondant respectivement à ladite position complètement étendue et à ladite position complètement rétractée de la table (14).

11. Dispositif (10) selon l'une quelconque des revendications précédentes, comprenant des moyens (41) pour séparer, durant l'opération de déchargement, les deux pans de la peau (11) suspendue sur ladite barre de suspension (13).

12. Dispositif (10) selon la revendication 11, dans lequel lesdits moyens de séparation (41) comprennent une tige (42) présentant une extrémité pointue (43), ladite tige étant connectée, à son autre extrémité, à un système de commande linéaire pneumatique (44) capable de la déplacer axialement entre les deux pans de la peau suspendue sur la barre de suspension (13), ladite tige pointue (42) et son système de commande (44) étant serrés sur deux petites plates-formes (45, 46) pouvant coulisser sur deux guides (47, 48) situés sur une colonne de cadre (25) perpendiculairement à la direction de travail dudit système de commande (44), deux autres cylindres pneumatiques (49, 50) étant montés sur deux consoles séparées (51, 52) fixées sur ladite colonne (25) de manière à séparer les pans de la peau en déplaçant à la fois la tige (42) et le système de commande (44) le long desdits guides (47, 48) après que la tige (42) ait été insérée entre lesdits pans de la peau.

13. Dispositif (10) selon l'une quelconque des revendications précédentes, dans laquelle des aspirateurs d'air (40) sont situés à l'intérieur de ladite table (14) à proximité de sa surface supérieure, de manière à améliorer l'adhérence de la peau sur ladite table, en particulier durant l'opération de déchargement de la peau.

14. Procédé pour charger des peaux, ou analogues, sur des transporteurs à chaîne aériens équipés de barres de suspension horizontales, comprenant les étapes consistant à:
- transporter une peau (11) le long d'une table (14) présentant un côté d'extrémité (15) fixé sur des moyens de support (20);
- détecter le passage de la peau (11) en un premier point prédéterminé (28) de ladite table;
- déplacer l'autre côté (16) de ladite table (14) en étendant ou en inclinant en tout ou en partie ladite table (14) entre une position de départ et une position opérationnelle, ladite position de départ correspondant à une position complètement rétractée de ladite table, ladite position opérationnelle correspondant à une position inclinée ou à une position complètement étendue de ladite table dans laquelle ledit autre côté d'extrémité (16) se trouve à proximité d'une première barre de suspension (13) dudit transporteur à chaîne aérien ;
- détecter le passage de la peau en un deuxième point prédéterminé (29) de ladite table (14);
- amener la première moitié de la peau (11) au-delà de ladite barre de suspension (13);
- reculer ledit autre côté d'extrémité (16) de la table (14) en direction de ladite position de départ.

15. Procédé pour décharger des peaux, ou analogues, à partir de transporteurs à chaîne aériens équipés de barres de suspension horizontales, comprenant les étapes consistant à:
- soulever un côté d'extrémité (16) de la table (14) à partir d'une position de départ entre les deux pans d'une peau (11) suspendue sur une barre de suspension (13) dudit transporteur à chaîne aérien, ladite table (14) présentant un autre côté d'extrémité (15) fixé sur les moyens de support (20) d'une manière fixe ou coulissante;
- conduire ladite peau (11) à partir dudit côté d'extrémité soulevé (16) le long de ladite table en direction dudit autre côté d'extrémité (15);
- détecter le passage de la peau en un point prédéterminé (29) de ladite table (14);
- reculer ledit côté d'extrémité soulevé de la table (14) en direction de ladite position de départ.
